# DEMANDE DE BREVET EUROPEEN

(11) **EP 1 614 533 A1**
(43) Date de publication de la demande: **11.01.2006**
(21) Numéro de dépôt: 05013082.2
(22) Date de dépôt: 17.06.2005
(51) Int. Cl.: B32B 27/32

(54) **Materiau dit "alveolaire"**

(30) Priorité: 18.06.2004 FR 0406626
(71) Demandeur: GAILLON S.A.S., 69830 St. Georges de Reneins (FR)
(72) Inventeur: Dupoyet, Guy, 69740 Genas (FR); Gaiffe, Xavier, 69460 Blace (FR)

(57) **Abrégé**

Ce matériau (10) comprend deux parois de base (12) formant les faces principales du matériau (10) et des cloisons (13) perpendiculaires à ces parois de base (12) et reliées à celles-ci, maintenant ces dernières à distance l'une de l'autre, au moins une partie des cloisons (13), et éventuellement au moins une des parois de base (12) ou une partie de ces parois de base (12), étant réalisée en une matière cellulaire rigide, notamment une polyoléfine expansée.

Selon l'invention, chaque cloison en matière cellulaire rigide a une épaisseur supérieure à 5 % de l'épaisseur totale du matériau.

## Description

La présente invention concerne un matériau dit "alvéolaire", que l'on trouve habituellement soit sous forme de plaque ou de feuille, soit sous forme de profilés.

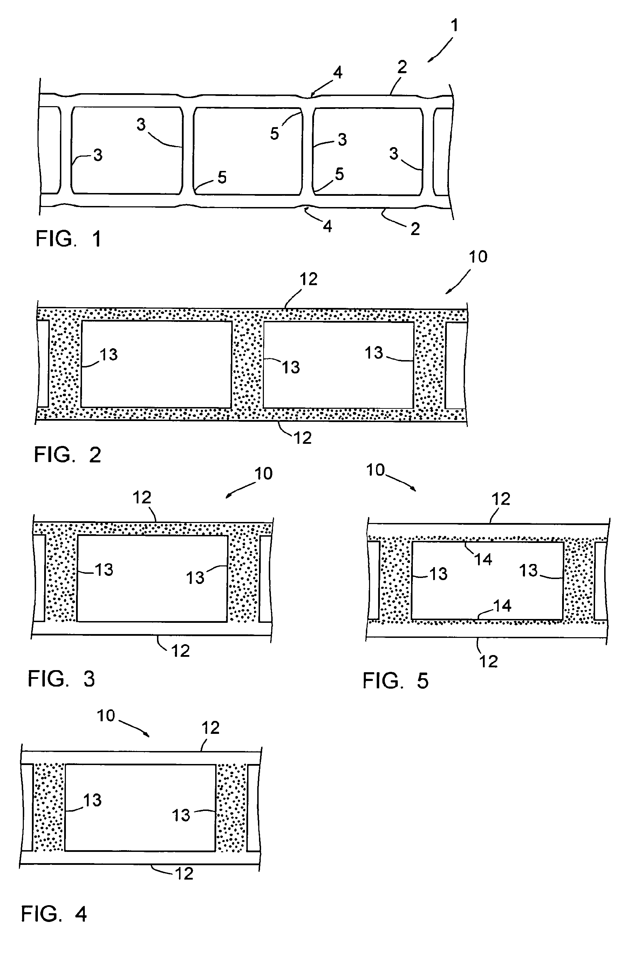

Comme le montre la figure 1, un matériau 1 de ce type comprend deux parois de base 2 formant les faces principales du matériau et des cloisons 3 perpendiculaires à ces parois de base 2, maintenant ces dernières à distance l'une de l'autre. Ce matériau est notamment en matière synthétique, lesdites parois de base et cloisons étant réalisées par une même opération de moulage, en particulier par extrusion.

Ce genre de matériau est bien connu et est d'utilisation courante notamment pour la réalisation de boîtes d'emballage, d'intercalaires de palettes de manutention ou de panneaux d'affichage, lorsqu'il s'agit de plaques ou de feuilles, ou pour la réalisation de planchers ou de panneaux, lorsqu'il s'agit de profilés.

Dans un tel matériau, l'épaisseur des cloisons est en moyenne de l'ordre de 5 % de l'épaisseur totale du matériau.

Ce genre de matériau présente cependant l'inconvénient important d'avoir une résistance limitée à la compression dans une direction perpendiculaire aux parois de base 2, du fait soit d'un flambage des cloisons 3, c'est-à-dire d'un pliage longitudinal de celles-ci, soit d'une déformation "en parallélogramme" du matériau 1 par suite de pivotements des cloisons 3 par rapport aux parois de base 2 au niveau des zones de jonction de ces cloisons à ces parois de base.

Ce genre de matériau a également pour inconvénient d'imposer l'emploi d'une matière dépourvue d'impuretés et ayant un degré de fluidité élevé. En effet, la présence d'impuretés dans cette matière, ou une fluidité insuffisante de cette matière, risque d'empêcher un remplissage suffisant des rainures destinées à réaliser le moulage des cloisons 3 lors de l'extrusion de la matière. Ce remplissage insuffisant se produit en particulier au niveau des zones médianes des cloisons et est la cause principale du risque de flambage précité de ces cloisons en cas de compression du matériau.

Ce genre de matériau a en outre pour inconvénients d'avoir une résistance moyenne à la pliure, une telle pliure provoquant également un flambage desdites cloisons dans les zones du matériau adjacentes à la pliure, et de présenter un aspect de surface irrégulier au niveau des faces extérieures des parois de base 2, ce qui limite son utilisation dans certaines applications requérant des aspects de surface lisses. Cet aspect de surface irrégulier résulte de l'existence de dépressions longitudinales 4 au droit des cloisons 3 du fait du retrait de la matière lors de son refroidissement, ce retrait se produisant de manière différenciée aux droits des cloisons 3 et entre ces cloisons compte tenu des épaisseurs différentes de la matière en ces différentes zones (phénomène bien connu dit des "chaudes de retrait"). Ces retraits existent d'autant plus qu'il est courant de prévoir des congés 5 au niveau des zones de jonction des cloisons 3 avec les parois de base 2, afin de renforcer la résistance du matériau à la déformation "en parallélogramme".

La présente invention vise à remédier à l'ensemble de ces inconvénients.

Le document n° US 5,914,175, décrit une structure de panneau de construction comprenant deux panneaux alvéolaires fixés l'un à l'autre de telle sorte que les cloisons d'un panneau soient perpendiculaires aux cloisons de l'autre panneau. Les cloisons de ces panneaux sont moins épaisses que les parois de base de ces mêmes panneaux, et l'épaisseur des cloisons est petite par rapport à l'épaisseur totale d'un panneau. Les panneaux peuvent être formés en des compositions de matières plastiques à cellules fermées.

Le panneau selon ce document ne remédie pas aux inconvénients précités.

Le document n° WO 00/30845 décrit un panneau multicouches composite ayant une couche centrale en matériau expansé à haute densité et au moins une couche latérale à structure en nid d'abeilles ou en grille, cette couche latérale ayant, sur au moins une de ses faces et de préférence sur les deux, un revêtement en matière plastique à haut module de résistance. Le panneau peut comprendre une ou plusieurs couches de rigidification, par exemple à structure en nids d'abeilles, en barres, en bandes ou en grille.

Le panneau selon ce document ne remédie pas non plus aux inconvénients précités.

Le document GB 2 120 167 décrit une structure de panneau déformable destiné à être utilisé dans des bâtiments lors d'opérations de moulage de béton, la déformabilité de tels panneaux permettant une déformabilité du bâtiment et donc une adaptabilité de ce dernier à d'éventuels mouvements de terrain.

Ce panneau comprend des parois latérales en matériau résistant à l'eau et une âme en matériau cellulaire pouvant être formée par des blocs allongés, parallèles entre eux, en matériau cellulaire. Les parois latérales sont collées à l'âme.

Le panneau selon ce document ne remédie pas non plus aux inconvénients précités des panneaux "alvéolaires" utilisés notamment pour la réalisation de boîtes d'emballage ou de panneaux d'affichage.

L'objectif principal de la présente invention est donc de fournir un matériau présentant des résistances augmentées à la compression dans une direction perpendiculaire aux parois de base, et à la pliure.

Un autre objectif de l'invention est de fournir un matériau dont les propriétés de résistance mécanique ne sont pas affectées par la présence éventuelle d'impuretés dans la matière destinée à constituer ce matériau, et n'imposant pas l'emploi d'une matière spécifique, ayant un degré de fluidité élevé.

Un autre objectif encore de l'invention est de fournir un matériau présentant un aspect de surface aussi lisse que possible au niveau des faces extérieures de ses parois de base.

Le matériau concerné comprend, de manière connue en soi, deux parois de base formant les faces principales du matériau et des cloisons perpendiculaires à ces parois de base et reliées à celles-ci, maintenant ces dernières à distance l'une de l'autre, dans lequel au moins une partie des cloisons, et éventuellement au moins une des parois de base ou une partie de ces parois de base, est réalisée en une matière cellulaire rigide, notamment une polyoléfine expansée.

Selon l'invention, chaque cloison en matière cellulaire rigide a une épaisseur supérieure à 5 % de l'épaisseur totale du matériau.

La matière cellulaire rigide permet de donner aux cloisons une épaisseur supérieure ou nettement supérieure à l'épaisseur qu'ont ces cloisons dans les matériaux selon la technique antérieure, sans alourdissement significatif du matériau.

Cette épaisseur augmentée permet l'obtention d'une parfaite résistance des cloisons vis-à-vis des contraintes exercées en compression sur le matériau, et d'une parfaite liaison des cloisons aux parois de base. Il en résulte une résistance très supérieure du matériau à la compression dans une direction perpendiculaire auxdites parois de base, ainsi qu'à la pliure. Cette épaisseur augmentée permet de plus de faciliter grandement l'arrivée des flux de matière dans les zones médianes des cloisons lors de l'opération de moulage, garantissant ainsi un total remplissage des rainures de moulage des cloisons et donc une parfaite homogénéité de structure de ces cloisons.

De plus, l'épaisseur des cloisons réduit très fortement le phénomène de retrait au niveau des zones de raccordement des cloisons aux parois de base, compte tenu de la faible densité de la matière au niveau de ces zones de raccordement, et limite, voire même élimine, la nécessité de congés au niveau des zones de raccordement des cloisons aux parois de base pour assurer la rigidité de ce raccordement. Le matériau selon l'invention peut ainsi présenter, au niveau des faces extérieures des parois de base, une surface beaucoup plus régulière et plane qu'un matériau selon la technique antérieure. Il doit être noté que, lorsque la matière cellulaire rigide est réalisée au moment de la fabrication du matériau, notamment lorsqu'une expansion d'une polyoléfine est réalisée au moment de la fabrication du matériau par coextrusion, l'expansion de la matière cellulaire se poursuit dans le conformateur dans lequel est placé le matériau après moulage. Cette expansion contribue alors à compenser d'éventuels retraits subsistant au niveau des faces extérieures des parois de base, et contribue ainsi à l'obtention de surfaces planes au niveau des faces extérieures desdites parois de base.

En outre, grâce à la structure alvéolaire du matériau, le gaz d'expansion peut s'échapper majoritairement dans les espaces délimités par les cloisons entre elles, ce qui limite l'échappement de ce gaz au travers des parois de base. L'aspect de surface de ces parois de base au niveau de leurs faces extérieures n'est donc pas ou peu affecté par cet échappement.

De préférence, chaque cloison en matière cellulaire rigide a une épaisseur supérieure à 10 % de l'épaisseur totale de ce matériau. L'épaisseur des cloisons peut en particulier être comprise entre 10 et 30 % de l'épaisseur totale du matériau.

Le matériau est de préférence en matière synthétique.

Lesdites parois de base et cloisons sont alors réalisées de préférence par une même opération de moulage, en particulier par extrusion.

Le matériau peut comprendre une ou deux couches expansées s'étendant le long de l'une ou des deux des parois de base côté interne, en étant liée(s) à celle(s)-ci.

Par ailleurs, l'augmentation de la résistance des cloisons au niveau de leur zone médiane et de la résistance de la jonction des cloisons aux parois de base permet de prévoir un espacement supérieur des cloisons, à résistance égale du matériau. L'entraxe des cloisons peut ainsi être augmenté de 20 à 100 % par rapport à l'entraxe des cloisons d'un matériau conforme à la technique antérieure. L'entraxe des cloisons d'un matériau conforme à la technique antérieure étant sensiblement équivalent à l'épaisseur du matériau, l'entraxe des cloisons du matériau selon l'invention peut aller de 1,2 à 2 fois l'épaisseur du matériau.

Cette augmentation de l'entraxe des cloisons permet, outre un allégement du matériau, de réduire la fréquence d'éventuelles irrégularités de surfaces au niveau des faces extérieures des parois de base.

En outre, lorsque la matière constituant le matériau est une polyoléfine, cette matière est avantageusement chargée d'une charge minérale, par exemple de type talc ou craie, ou d'une charge organique, par exemple de type fibres ou particules de bois, ou fibres ou particules végétales, notamment de chanvre.

Cette charge permet l'obtention d'une meilleure stabilité dimensionnelle du matériau, d'une plus grande rigidité de ce matériau, d'un coût de fabrication diminué, et d'une meilleure capacité à être fixé par clouage, vissage ou agrafage.

Le pourcentage de charges peut varier entre 5 et 80 % en poids du matériau, voire peut aller jusqu'à 90 % dans le cas où la polyoléfine est un polypropylène.

L'invention sera bien comprise, et d'autres caractéristiques et avantages de celle-ci apparaîtront, en référence au dessin schématique annexé, représentant, à titre d'exemples non limitatifs, plusieurs formes de réalisation possibles du matériau qu'elle concerne.

Les figures 2 à 5 sont des vues par le côté, à échelle agrandie, de portions de ce matériau, selon quatre formes de réalisation.

Par simplification, les parties ou éléments d'une forme de réalisation qui se retrouvent de manière identique ou similaire dans une autre forme de réalisation seront identifiés par les mêmes références numériques et ne seront pas à nouveau décrits.

La figure 2 représente un matériau dit "alvéolaire" 10 sous forme de plaque, comprenant deux parois de base 12 formant les faces principales du matériau 10 et des cloisons 13 perpendiculaires à ces parois de base 12, maintenant ces dernières à distance l'une de l'autre.

Ce matériau 10 est réalisé en une matière cellulaire rigide, notamment une polyoléfine expansée, lesdites parois de base 12 et cloisons 13 étant réalisées par une même opération de moulage, en particulier par extrusion, et chaque cloison 13 du matériau 10, ou chaque cloison 13 d'une partie des cloisons 13 que comprend ce matériau 10, présente une épaisseur augmentée par rapport aux cloisons 3, de l'ordre de 30 % de l'épaisseur totale du matériau 10 dans l'exemple représenté.

L'entraxe des cloisons 13 est également augmenté par rapport à celui des cloisons 3, de l'ordre de 50 % dans l'exemple représenté.

Le matériau 10 peut comprendre une paroi de base 12 (cf. figure 3), ou les deux parois de base 12 (cf. figure 4), réalisée(s) en une matière non expansée, assemblée(s) aux cloisons 13. Ce matériau 10 est notamment obtenu par coextrusion de la matière destinée à constituer ces parois de base 12 avec la matière expansée destinée à constituer ces cloisons13.

Le matériau 10 peut également comprendre une ou deux couches expansées 14 s'étendant le long de l'une ou des deux des parois de base 12 côté interne (cf. figure 5), en étant liée(s) à celle(s)-ci. Ces couches 14 permettent d'assurer une parfaite liaison de la ou des parois de base 12 aux cloisons 13.

Lorsque le matériau 10 est fabriqué par coextrusion comme indiqué ci-dessus, les couches 14 peuvent être obtenues simplement en jouant sur les débits des matières, le débit en matière expansée étant augmenté par rapport au débit en matière non expansée.

Comme cela se comprend en référence aux figures, le matériau cellulaire rigide précité permet de donner aux cloisons 13 une épaisseur supérieure ou nettement supérieure à l'épaisseur qu'ont ces cloisons 3 dans les matériaux 1 selon la technique antérieure, sans alourdissement significatif du matériau 10. Cette épaisseur augmentée permet l'obtention d'une parfaite résistance des cloisons 13 vis-à-vis des contraintes exercées en compression sur le matériau 10 et d'une parfaite liaison des cloisons 13 aux parois de base 2, et permet de faciliter grandement l'arrivée des flux de matière dans les zones médianes des cloisons 13 lors du moulage du matériau 10.

L'entraxe augmenté de ces cloisons 13, rendu possible par l'épaisseur des cloisons 13 et la rigidité de la jonction de ces cloisons aux parois de base 12, permet un allégement du matériau 10.

L'épaisseur des cloisons 13 réduit par ailleurs très fortement le phénomène de retrait au niveau des zones de raccordement de ces cloisons aux parois de base 12, et élimine dans ce cas la nécessité de congés 5. Le matériau 10 présente ainsi, au niveau des faces extérieures des parois de base 12, une surface beaucoup plus régulière et plane que le matériau 1.

Il va de soi que l'invention n'est pas limitée aux formes de réalisation décrites ci-dessus à titre d'exemples mais qu'elle s'étend à toutes les formes de réalisations couvertes par les revendications ci-annexées.

## Revendications

1. Matériau (10) dit "alvéolaire", c'est-à-dire comprenant deux parois de base (12) formant les faces principales du matériau (10) et des cloisons (13) perpendiculaires à ces parois de base (12) et reliées à celles-ci, maintenant ces dernières à distance l'une de l'autre, dans lequel au moins une partie des cloisons (13), et éventuellement au moins une des parois de base (12) ou une partie de ces parois de base (12), est réalisée en une matière cellulaire rigide, notamment une polyoléfine expansée, **caractérisé en ce que** chaque cloison en matière cellulaire rigide a une épaisseur supérieure à 5 % de l'épaisseur totale du matériau.

2. Matériau (10) selon la revendication 1, **caractérisé en ce que** chaque cloison en matière cellulaire rigide a une épaisseur supérieure à 10 % de l'épaisseur totale de ce matériau.

3. Matériau (10) selon la revendication 2, **caractérisé en ce que** l'épaisseur des cloisons est comprise entre 10 et 30 % de l'épaisseur totale du matériau.

4. Matériau (10) selon l'une des revendications 1 à 3, **caractérisé en ce qu'**il est en matière synthétique.

5. Matériau (10) selon la revendication 4, **caractérisé en ce que** lesdites parois de base et cloisons sont réalisées par une même opération de moulage, en particulier par extrusion.

6. Matériau (10) selon l'une des revendications 1 à 5, **caractérisé en ce qu'**il comprend une paroi de base (12), ou les deux parois de base (12), réalisée(s) en une matière non expansée, assemblée(s) aux cloisons (13).

7. Matériau (10) selon l'une des revendications 1 à 6, **caractérisé en ce qu'**il comprend une ou deux couches expansées (14) s'étendant le long de l'une ou des deux des parois de base (12) côté interne, en étant liée(s) à celle(s)-ci.

8. Matériau (10) selon l'une des revendications 1 à 7, **caractérisé en ce que** l'entraxe des cloisons (13) peut aller de 1,2 à 2 fois l'épaisseur du matériau.

9. Matériau (10) selon l'une des revendications 1 à 8, **caractérisé en ce que** la matière constituant le matériau est une polyoléfine, et **en ce que** cette matière est chargée d'une charge minérale, par exemple de type talc ou craie, ou d'une charge organique, par exemple de type fibres ou particules de bois, ou fibres ou particules végétales, notamment de chanvre.

10. Matériau (10) selon la revendication 9, **caractérisé en ce que** le pourcentage de charges varie entre 5 et 80 % en poids du matériau, voire peut aller jusqu'à 90 % dans le cas où la polyoléfine est un polypropylène.
